# EUROPÄISCHE PATENTSCHRIFT

(11) **EP 2 868 445 B1**
(45) Veröffentlichungstag und Bekanntmachung des Hinweises auf die Patenterteilung: **05.10.2022**
(21) Anmeldenummer: 14191772.4
(22) Anmeldetag: 04.11.2014
(51) Int. Cl.: B25J 9/22, B25J 9/16, G05B 19/423

(54) **Verfahren zum Programmieren von Bewegungsabläufen eines redundanten Industrieroboters und zugehöriger Industrieroboter**
Method for programming sequences of movements of a redundant industrial robot and associated industrial robot
Procédé de programmation de déroulements de mouvement d'un robot industriel redondant et robot industriel associé

(30) Priorität: 05.11.2013 DE 102013222456
(43) Veröffentlichungstag der Anmeldung: 06.05.2015
(73) Patentinhaber: KUKA Deutschland GmbH, 86165 Augsburg (DE)
(72) Erfinder: Riedel, Martin, 86165 Augsburg (DE); Bischoff, Rainer, 86163 Augsburg (DE)
(74) Vertreter: Böss, Dieter Alexander

(56) Entgegenhaltungen:
- EP-A1- 2 774 729
- WO-A1-2013/038544
- WO-A1-2013/164470
- WO-A1-2014/043702
- WO-A2-2006/124390
- DE-A1-102011 079 117
- US-A- 5 737 500

## Beschreibung

Die Erfindung betrifft ein Verfahren zum Programmieren von Bewegungsabläufen eines redundanten Industrieroboters durch manuell geführtes Verstellen der Pose eines Manipulatorarms des Industrieroboters, der mehrere aufeinander folgende Glieder aufweist, die durch verstellbare, wenigstens ein redundantes Gelenk umfassende Gelenke verbunden sind, die von wenigstens einer Robotersteuerung des Industrieroboters angesteuert verstellbar sind. Die Erfindung betrifft außerdem einen zugehörigen Industrieroboter.

Aus der DE 10 2011 106 321 A1 ist ein Verfahren zum Steuern eines insbesondere humankollaborierenden Roboters bekannt, bei dem eine roboter- oder aufgabenspezifische Redundanz des Roboters aufgelöst wird. Als humankollaborierender Roboter wird in diesem Zusammenhang insbesondere ein Roboter bezeichnet, der mit einem Menschen physisch interagiert, beispielsweise, indem ein Aufenthalt des Menschen in einem Arbeitsraum des Roboters vorgesehen ist. Insbesondere bei solchen Roboterapplikationen ist es wünschenswert, die Folgen einer Kollision eines Kontaktpunktes des Roboters mit seiner Umgebung, insbesondere dem Menschen, zu reduzieren. Bisher werden hierzu, beispielsweise nach ISO-10218, Grenzwerte vorgegeben, etwa eine maximale Geschwindigkeit eines Werkzeugbezugspunktes, dem so genannten Tool-Center-Point (TCP) von 0,2 bis 0,25 m/s. Derartige humankollaborierende Roboter sind am Markt erhältlich und werden unter anderem auch als Leichtbauroboter bezeichnet.

Die US 5,737,500 beschreibt einen Roboterarm mit sieben Freiheitsgraden, der auf einer mobilen Plattform befestigt ist. Bei diesem zweifach redundanten System werden die Redundanzen mittels mathematischer Algorithmen automatisch aufgelöst.

Die DE 10 2011 079 117 A1 beschreibt ein Verfahren zum Programmieren eines Roboters, bei dem ein automatisches Bewerten der aktuellen Stellung der Achsen des Roboterarms für die aktuelle Pose aufgrund wenigstens eines vorgegebenen und/oder vorgebbaren Kriteriums insbesondere mittels der Steuervorrichtung und/oder einer Rechenvorrichtung erfolgt, und das Ergebnis des Bewertens der aktuellen Stellung der Achsen mittels einer Anzeigevorrichtung optisch angezeigt wird.

Die EP 2 774 729 A1 beschreibt ein Robotersystem und eine Robotersteuerung, wobei der Roboterarm sieben Freiheitsgrade aufweist und die sich daraus ergebende Redundanz mittels Optimierungsverfahren automatisch aufgelöst wird. Der Roboterarm kann mittels eines Bedienhandgeräts manuell von einer Person in seinen Gelenkstellungen verstellt werden.

Die WO 2006/124390 A2 beschreibt ein Robotersystem, das einen Manipulator aufweist, um ein Wirkglied an einem distalen Ende relativ zu einem proximalen Sockel zu bewegen, wobei der Manipulator eine Vielzahl von Gelenken aufweist, die redundante Freiheitsgrade besitzen. Dabei ist eine Eingabevorrichtung zum Empfangen einer Angabe einer gewünschten Bewegung des Wirkglieds am distalen Ende vorgesehen. Ein Prozessor ist zum gleichzeitigen Arbeiten konfiguriert, und zwar sowohl in einer Manipulationsbetriebsart des Wirkglieds am distalen Ende, in welcher der Prozessor die gewünschte Bewegung der Gelenke bestimmt, um die gewünschte Bewegung des Wirkglieds am distalen Ende zu bewirken, als auch in einer Kopplungsbetriebsart, in welcher der Prozessor die gewünschte Bewegung wenigstens eines der Gelenke auf Grundlage eines manuellen Bewegens eines anderen Gelenks des Manipulators bestimmt.

Aufgabe der Erfindung ist es, das Programmieren von Bewegungsabläufen eines redundanten Industrieroboters durch manuell geführtes Verstellen der Pose eines Manipulatorarms des Industrieroboters zu verbessern, insbesondere zu vereinfachen.

Die Aufgabe der Erfindung wird gelöst durch ein Verfahren zum Programmieren von Bewegungsabläufen eines redundanten Industrieroboters durch manuell geführtes Verstellen der Pose eines Manipulatorarms des Industrieroboters, der mehrere aufeinander folgende Glieder aufweist, die durch verstellbare, wenigstens ein redundantes Gelenk umfassende Gelenke verbunden sind, die von wenigstens einer Robotersteuerung des Industrieroboters angesteuert verstellbar sind, aufweisend die Schritte:
- manuell geführtes Verstellen desjenigen Gliedes des Manipulatorarms, dem ein Werkzeugbezugspunkt zugeordnet ist, aus einer ersten Position und ersten Orientierung im Raum in eine zweite Position und/oder zweite Orientierung im Raum,
- Rückrechnen der Gelenkstellungswerte aller Gelenke des Manipulatorarms aus der zweiten Position und zweiten Orientierung des Werkzeugbezugspunktes des Manipulatorarms unter Auflösung der Redundanz durch Bestimmen eines optimierten Gelenkstellungswertes des wenigstens einen redundanten Gelenks,
- automatisches Einstellen aller Gelenke des Manipulatorarms angesteuert durch die Robotersteuerung auf Grundlage der rückgerechneten, optimierten Gelenkstellungswerte während des manuell geführten Verstellens, wobei die Robotersteuerung ausgebildet und/oder eingerichtet ist, nach einem automatischen Einstellen oder während eines automatischen Einstellens aller Gelenke des Manipulatorarms angesteuert durch die Robotersteuerung auf Grundlage der rückgerechneten, optimierten Gelenkstellungswerte während des manuell geführten Verstellens, ein manuelles Verstellen des wenigstens einen redundanten Gelenks des Manipulatorarms mit Kraftrückkopplung zuzulassen,
   wobei eine Optimierung des Gelenkstellungswertes des wenigstens einen redundanten Gelenks (4) nach statischen und/oder kinetischen Eigenschaften des Manipulatorarms (1a) erfolgt, wobei die zu optimierende Eigenschaft eine Prozesskraft, eine Steifigkeit des Manipulatorarms und/oder eine Sensitivität bei der Kraftrückkopplung des Manipulatorarms ist.

Unter einem redundanten Industrieroboter wird ein mittels einer Robotersteuerung bewegbarer Manipulatorarm verstanden, der mehr manipulatorische Freiheitsgrade aufweist, als zur Erfüllung einer Aufgabe notwendig sind. Der Grad der Redundanz ergibt sich aus der Differenz der Anzahl von Freiheitsgraden des Manipulatorarms und der Dimension des Ereignisraums, in dem die Aufgabe zu lösen ist. Es kann sich dabei um eine kinematische Redundanz oder um eine aufgabenspezifische Redundanz handeln. Bei der kinematischen Redundanz ist die Anzahl der kinematischen Freiheitsgrade, im Allgemeinen die Anzahl der Gelenke des Manipulatorarms, größer als der Ereignisraum, welcher in einer realen Umgebung bei einer Bewegung im Raum durch die drei translatorischen und die drei rotatorischen Freiheitsgrade, also von sechs Freiheitsgrade gebildet wird. Ein redundanter Industrieroboter kann also beispielsweise ein Leichtbauroboter mit sieben Gelenken, insbesondere sieben Drehgelenken sein. Bei der aufgabenspezifischen Redundanz ist die Dimension der Aufgabenstellung hingegen kleiner als die Anzahl der kinematischen Freiheitsgrade des Manipulatorarms.

Manipulatorarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Manipulatorarm mit mehreren über Gelenke verbundene Glieder und programmierbare Robotersteuerungen (Steuervorrichtungen) auf, die während des Betriebs die Bewegungsabläufe des Manipulatorarms automatisch steuern bzw. regeln. Die Glieder werden über Antriebe, insbesondere elektrische Antriebe, die von der Robotersteuerung angesteuert werden, insbesondere bezüglich der Bewegungsachsen des Industrieroboters, welche die Bewegungsfreiheitsgrade der Gelenke repräsentieren, bewegt.

Ein mehrere über Gelenke verbundene Glieder aufweisender Manipulatorarm kann als ein Knickarmroboter mit mehreren seriell nacheinander angeordneten Gliedern und Gelenken konfiguriert sein, insbesondere kann der redundante Industrieroboter einen Manipulatorarm mit sieben oder mehr Gelenken aufweisen.

Manipulatorarme mit zugehörigen Robotersteuerungen, wie Industrieroboter können aber insbesondere sogenannte Leichtbauroboter sein, die sich zunächst von üblichen Industrierobotern dadurch unterscheiden, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter insbesondere kraftgeregelt statt positionsgeregelt betrieben werden, was beispielsweise ein manuelles Verstellen der Pose des Manipulatorarmes vereinfacht. Außerdem kann dadurch eine sichere Mensch-Maschine-Kooperation erreicht werden, da beispielsweise unbeabsichtigte Kollisionen des Manipulatorarmes mit Personen entweder verhindert oder zumindest derart abgeschwächt werden können, so dass den Personen kein Schaden entsteht. Ein solcher Manipulatorarm bzw. ein solcher Leichtbauroboter weist üblicherweise mehr als sechs Freiheitsgrade auf, so dass insoweit ein überbestimmtes System geschaffen wird, wodurch derselbe Punkt im Raum in gleicher Orientierung in mehreren, insbesondere sogar unendlich vielen verschiedenen Posen des Manipulatorarms erreicht werden kann. Der Leichtbauroboter kann auf externe Krafteinwirkungen in geeigneten Weisen reagieren. Zur Kraftmessung können Kraftsensoren verwendet werden, die in allen drei Raumrichtungen Kräfte und Drehmomente messen können. Alternativ oder ergänzend können die externen Kräfte auch sensorlos, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

Unter der Pose des Manipulatorarms wird ganz allgemein die Summe aller Gelenkstellungen von Gelenken des Manipulatorarms verstanden, welche die einzelnen Glieder des Manipulatorarms verstellbar verbinden. Im engeren Sinne kann bei einem eindeutig bestimmten System unter Pose beispielsweise auch schon die Position und die Orientierung eines Bezugspunktes, wie beispielsweise eines Werkzeugbezugspunktes (Tool-Center-Points / TCP) des Manipulatorarms verstanden werden. Der Werkzeugbezugspunkt kann beispielsweise durch einen geeigneten Punkt an einem Handflansch des Manipulatorarms gebildet werden, an dem ein Greifer, ein Werkzeug oder eine sonstige Vorrichtung befestigt ist, um diese durch Verstellen der Pose des Manipulatorarms im Raum bewegen zu können. Ganz allgemein kann der Werkzeugbezugspunkt ein virtueller Raumpunkt auch außerhalb des Manipulatorarms sein, der jedoch geometrisch starr mit einem der Glieder des Manipulatorarms, insbesondere dem Handflansch des Manipulatorarms verbunden ist.

Unter einem manuell geführten Verstellen der Pose des Manipulatorarms wird im Allgemein verstanden, dass die momentanen Gelenksstellungen des Manipulatorarms dadurch verändert werden, dass ein Bediener des Industrieroboters den Manipulatorarm an einem oder mehreren seiner Gelenke anfasst und beispielsweise durch Drücken, Ziehen und/oder Drehen des gegriffenen Gliedes oder der gegriffenen Glieder die Pose des Manipulatorarms verändert, d.h. verstellt. In einem grundlegenden Ausführungsbeispiel kann an dem in der kinematischen Kette letzten Glied des Manipulatorarms, d.h. am Handflansch des Manipulatorarms beispielsweise ein Griff befestigt oder zumindest ein Griffabschnitt vorgesehen sein, insbesondere starr befestigt sein, über den eine Führungskraft in die mechanisch Struktur des Manipulatorarms eingeleitet werden kann. Eine Führungskraft kann aber auch durch direktes Anfassen, insbesondere Umfassen des in der kinematischen Kette letzten Glied des Manipulatorarms in die mechanisch Struktur des Manipulatorarms eingeleitet werden. Eine solche vom Bediener des Industrieroboters auf den Manipulatorarm aufgebrachte Führungskraft kann beispielsweise durch speziell dazu ausgebildete und eingerichtete Sensoren, insbesondere Kraftsensoren unmittelbar gemessen werden, oder aus Messwerten an bereits vorhandenen Gelenkssensoren, insbesondere Kraft-/Momentsensoren des Manipulatorarms mittelbar errechnet oder indirekt aus Motorströmen der Antriebe des Gelenke des Industrieroboters bestimmt werden. Alternativ kann in einer anderen Ausführungsform ein manuelles Verstellen des Manipulatorarms, statt durch Führen mit der Hand, gegebenenfalls auch durch Verfahren über ein Bediengerät, insbesondere durch Tasten, oder einen Joystick erfolgen.

Beispielsweise ein siebenachsiger Leichtbauroboter besitzt eine kinematisch redundante Struktur, die die sechs möglichen Bewegungsrichtungen im Raum durch sieben Freiheitsgrade des Roboters abdeckt. Hierdurch ist es im Allgemeinen möglich die Pose eines Werkzeugbezugspunktes, beispielsweise ein TCP eines Endeffektors in unendlich vielen Roboterstellungen anzufahren. Eine weit verbreitete Methode zur Auflösung dieser Redundanz ist die Definition eines Redundanzkreises, der durch unterschiedliche Stellungen beispielsweise des Ellenbogens beschrieben wird. Eine ideale Position des Ellenbogengelenks während der Bewegung ist dabei nicht bekannt, da diese von Anwendungsfall zu Anwendungsfall unterschiedlich zu wählen ist. Hierzu existieren verschiedene Ansätze, die beispielsweise eine gute Regelbarkeit, einen großen Bewegungsbereich in Hinblick auf Singularitäten und Gelenkwinkelbeschränkungen oder eine geringe Belastung der Antriebe priorisieren.

Neben der hohen Beweglichkeit ist ein Hauptvorteil eines Leichtbauroboters seine integrierte Kraftsensorik, die ein Hand-Teachen des Roboters - also ein Führen des Roboters für die Programmierung per Hand - sehr einfach gestaltet. Auf Grund der Redundanz kann hierbei nicht nur die Pose des Werkzeugbezugspunktes handgeführt, sondern auch die Stellung des Ellenbogens manuell vorgegeben werden. Als Stellung des Ellenbogens kann insbesondere eine Kombination der Gelenkwinkel, also die Pose (Position und Orientierung) eines gliedfesten Koordinatensystems im Raum bzw. in der Ebene verstanden werden. Beim automatischen Abfahren des Roboterprogramms fährt der Roboter dann die programmierte, d.h. geteachte Pose auch in der abgespeicherten Stellung an.

Dieses Vorgehen ist sehr bedienerfreundlich und erzeugt gut vorhersehbare Roboterbewegungen. Allerdings definiert der Benutzer durch seine konkrete Vorgabe der Stellung nicht nur die Pose des Werkzeugbezugspunktes, sondern auch stets die Leistungsfähigkeit des Roboters. Diese Leistungsfähigkeit, ausgedrückt über die so genannten kinetostatischen Eigenschaften, d.h. beispielsweise die Kraft- und Geschwindigkeitsübertragung vom Kartesischen- in den Achsraum und umgekehrt, die Genauigkeit und die Steifigkeit die der Roboter in einer bestimmten TCP Pose erreicht, ist nicht nur sehr inhomogen im Arbeitsraum des Roboters verteilt, sondern variiert auch über den Redundanzparameter, der beispielhaften Ellenbogenstellung. Die Eigenschaften des Roboters in einer bestimmten Pose und Stellung sind nur sehr schwer und mit hohem Fachwissen vorhersagbar. Ein ungeübter Nutzer kann somit den Roboter zwar sehr einfach programmieren, ihm jedoch auch unbewusst und schnell schlechtere Eigenschaften verleihen. Für viele Anwendungsfälle sind diese Eigenschaften immer noch ausreichend und im tolerierbaren Bereich. Soll der Roboter jedoch an den Leistungsgrenzen, beispielsweise in Bezug auf Taktzeit, Dynamik, Nutzlast oder Genauigkeit betrieben werden, ist eine willkürliche Stellung des Roboters durch den Benutzer nicht mehr Ziel führend.

Werden hingegen nur die Posen des Werkzeugbezugspunktes ohne der gesamten Pose des Manipulatorarms geteacht, so könnten durch einen Optimieransatz die Roboterstellungen bei der automatischen Ausführung des Programms bezüglich diverser Kriterien gewählt werden. Diese unterscheiden sich dann jedoch im Allgemeinen zu den Stellungen während des Teaching-Vorgangs. Die Folgen der vorher nicht vorhersehbaren Bewegung können Kollisionen mit Gefährdung von Mensch und Maschine sein.

Um nun Bewegungsabläufe zu programmieren, die später in einem Automatikmodus vollautomatisch ablaufen können, ist es bekannt den Manipulatorarm des redundanten Industrieroboters manuell geführt zu verstellen, bis der Werkzeugsbezugspunkt sich in einer gewünschten Position und gegebenenfalls auch in einer gewünschten Orientierung befindet. Der Werkzeugsbezugspunkt kann auch als Tool-Center-Point (TCP) bezeichnet werden und kann beispielsweise ein Arbeitspunkt eines am letzten Glied des Manipulatorarms, dem Handflansch befestigten Werkzeug sein. Alternativ kann der Werkzeugsbezugspunkt bzw. der Tool-Center-Point (TCP) beispielsweise auch ein fester Punkt am Handflansch des Manipulatorarms sein. In einer solchen gewünschten Pose des Werkzeugsbezugspunkts im Raum, werden die Koordinaten dieses Punktes im Raum, welche im Raum beispielsweise durch drei Positionswerte (X, Y,Z) und drei Orientierungswerte (A, B, C) repräsentiert werden, in einem Roboterprogramm der Robotersteuerung als Positionswerte gespeichert. Bewegungsabläufe können somit durch eine Abfolge von mehreren gespeicherten Posen des Werkzeugsbezugspunkts programmiert werden. Die gespeicherten Posen des Werkzeugsbezugspunkts können dann durch die Robotersteuerung beispielsweise in einem Punkt-zu-Punkt Bewegungsmodus (PTP) sukzessive angefahren werden. Alternativ kann aber auch eine Bewegungsbahn für den Werkzeugsbezugspunkt bestimmt, d.h. in der Robotersteuerung berechnet werden, beispielsweise in Form von geraden Strecken (LIN), die von einer gespeicherten Pose des Werkzeugsbezugspunkts zur jeweils nächsten führt, oder in Form von Spline-Kurven (SPLINE), welche sich über mehrere gespeicherte Posen des Werkzeugsbezugspunkts erstrecken.

Bei der Berechnung der Bewegungsbahnen aus solchen Stützpunkten von Posen des Werkzeugsbezugspunkts im Raum wird im Falle von redundanten Industrierobotern die Pose des Manipulatorarms, also die Gesamtbetrachtung aller Gelenkstellungen automatisch berechnet. Dabei muss die so genannte Redundanz aufgelöst werden, dass heißt auch demjenigen oder denjenigen redundanten Gelenken ein eindeutiger Gelenkstellungswert zugewiesen werden, für die bei einer Rückrechnung der Gelenkstellungswerten aus der jeweiligen Pose des Werkzeugsbezugspunkts unendlich viele Gelenkstellungswerte möglich wären. Diese Auflösung der Redundanz geschieht bisher erst zu demjenigen Zeitpunkt, wenn das Roboterprogramm bereits vollständig erzeugt ist und im Automatikmodus ausgeführt wird. Dies hat zur Folge, dass die Gesamtpose des Manipulatorarms über den Bewegungsablauf hinweg eine andere ist, als zum Zeitpunkt der Programmierung im Moment der Aufnahme der einzelnen Posen des Werkzeugsbezugspunkts. Dies bedeutet, dass der Manipulatorarm ein völlig anderes Verhalten im Raum zeigen kann, als es der Bediener, d.h. der Programmieren während des manuell geführten Verstellens eingestellt hatte. So kann es nach der Programmierung im Automatikbetrieb zu einem unerwünschten oder sogar gefährlichen Verhalten des Manipulatorarms, bis hin zu Kollisionen kommen.

Um dem Abzuhelfen kann in einem alternativen Programmierverfahren vorgesehen sein, dass nicht oder nicht nur die Posen des Werkzeugsbezugspunkts bei der Programmierung gespeichert werden, sondern dass ergänzend oder alternativ zu den Posen des Werkzeugsbezugspunkts sämtliche Gelenkstellungswerte aller Gelenke des Manipulatorarms erfasst und gespeichert werden. In einem solchen Fall entfällt eine Auflösung der Redundanz, da alle Gelenkstellungswerte bereits durch den Lehrvorgang, das sogenannte Teachen vorbestimmt sind. In dieser Art der Programmierung muss der Bediener, d.h. Programmieren jedoch neben dem Werkzeugsbezugspunkt auch sämtliche Gelenke manuell einstellen, zumindest jedoch das eine redundante Gelenk manuell einstellen. Dies bedeutet einerseits einen höheren Programmieraufwand und andererseits birgt dies die Gefahr, dass der Bediener ungünstige Gesamtposen des Manipulatorarms wählt, die im Hinblick auf die später automatisch auszuführenden Arbeitsabläufe des Industrieroboters nachteilig sein können.

Indem erfindungsgemäß vorgesehen ist, dass bereits während eines manuell geführte Verstellens des Manipulatorarms ein Rückrechnen der Gelenkstellungswerte aller Gelenke des Manipulatorarms aus der zweiten Position und zweiten Orientierung des Werkzeugbezugspunktes des Manipulatorarms unter Auflösung der Redundanz durch Bestimmen eines optimierten Gelenkstellungswertes des wenigstens einen redundanten Gelenks erfolgt, und ein automatisches Einstellen aller Gelenke des Manipulatorarms angesteuert durch die Robotersteuerung auf Grundlage der rückgerechneten, optimierten Gelenkstellungswerte während des manuell geführten Verstellens erfolgt, kann der Bediener sich auf die Programmierung von Posen und Bewegungsbahnen des Werkzeugbezugspunktes konzentrieren, ohne dass er die Pose des gesamten Manipulatorarms berücksichtigen, insbesondere selbst manuell verstellen muss. Ein weitere Vorteil ist, dass der Bediener unmittelbar über die sofortige im Hintergrund automatisch erfolgende Rückrechnung und Einstellung sämtlicher Gelenke des Manipulatorarms ein Feedback über die spätere tatsächliche Pose des gesamten Manipulatorarms schon während der manuell geführten Programmierung erhält. Dies hat den zusätzlichen Vorteil, dass eine Programmierung von Bewegungsabläufen auf einfache und schnelle Weise möglich ist und ein brauchbares, insbesondere sicher ausführbares und vorhersehbares Roboterprogramm erhalten wird.

In einer weiterführenden Ausgestaltung des erfindungsgemäßen Verfahrens kann ein Auswählen eines Algorithmus von mehreren vorgegebenen verschiedenen Algorithmen zur Rückrechnung der Gelenkstellungswerte aller Gelenke des Manipulatorarms aus der zweiten Position und zweiten Orientierung des Werkzeugbezugspunktes des Manipulatorarms unter Auflösung der Redundanz durch Bestimmen des optimierten Gelenkstellungswertes des wenigstens einen redundanten Gelenks erfolgen.

Um aus einer Vielzahl bzw. aus den unendlich vielen Lösungen für die Gelenkstellung des wenigstens einen redundanten Gelenks eine einzige geeignete Gelenkstellung herauszufinden, sind unterschiedlichste Algorithmen, insbesondere Optimierungsalgorithmen bekannt. In der vorliegenden Ausführungsform ist nun vorgesehen, dass in der Robotersteuerung wenigstens zwei, insbesondere mehrere verschiedene Algorithmen zur Auflösung der Redundanz verfügbar sind und insbesondere vor dem Ausführen des erfindungsgemäßen grundlegenden Verfahrens, gegebenenfalls noch während des Ausführens des erfindungsgemäßen grundlegenden Verfahrens von dem Bediener ein Algorithmus ausgewählt wird.

So kann also das Auswählen des Algorithmus durch einen Bediener des Industrieroboters insbesondere vor seinem manuell geführten Verstellen des Manipulatorarms erfolgen. Indem der Bediener vor einem handgeführten Programmieren der Bewegungsabläufe einen Algorithmus von mehreren möglichen Algorithmen auswählt, kann der Bediener das Verhalten der redundanten Gelenke, insbesondere der gesamten Pose des Manipulatorarms während dem handgeführten Programmieren nach bestimmten Kriterien vorgeben und somit ein grundsätzliches Verhalten des Manipulatorarms einer zu programmierenden Bearbeitungs- und/oder Handhabungsaufgabe anpassen. Dies verbessert nochmals die Vorhersehbarkeit des Verhaltens des Manipulatorarms sowohl während als auch nach der handgeführten Programmierung.

Erfindungsgemäß sind in der Robotersteuerung Algorithmen hinterlegt, welche eine automatische Optimierung der Gelenkstellungswerte des wenigstens einen redundanten Gelenks nach verschiedenen statischen und/oder kinetischen Eigenschaften des Manipulatorarms erlauben. Der Bediener kann insbesondere vor dem handgeführten Programmieren des Roboterprogramms einen gewünschten Algorithmus auswählen, der dann während des handgeführten Verstellens des Manipulatorarms verwendet wird, d.h. die Gelenke und insbesondere die redundanten Gelenke des Manipulatorarms dann automatisch entsprechend verstellt werden.

Alternativ oder ergänzend kann die nach statischen und/oder kinetischen Eigenschaften des Manipulatorarms erfolgende Optimierung des Gelenkstellungswertes des wenigstens einen redundanten Gelenks in Abhängigkeit von Anforderung an die zu programmierenden Bewegungsabläufe durchgeführt werden. Dies kann bedeuten, dass jedem in der Robotersteuerung hinterlegten Algorithmus eine zur Optimierungsstrategie passende Anforderung zugeordnet ist. So kann die Programmierung des Industrieroboters für einen Bediener vereinfacht werden, da er keine speziellen Kenntnisse über das jeweilige Verhalten der einzelnen Algorithmen haben muss, sondern der Bediener lediglich eine zu seiner Aufgabenstellung passende Anforderung auswählt, der wiederum in der Robotersteuerung ein bestimmter Algorithmus zugeordnet ist.

Die zu optimierende Eigenschaft ist eine Prozesskraft, eine Steifigkeit des Manipulatorarms und/oder eine Sensitivität bei der Kraftrückkopplung des Manipulatorarms sein. So ist es beispielsweise vorteilhaft, wenn im Falle einer Aufgabenstellung mit spanender Bearbeitung eines Werkstücks durch ein robotergeführtes Werkzeug, wie das Bohren oder Fräsen, der gesamte Manipulatorarm eine sehr hohe Steifigkeit aufweist, so dass eine maßgenaue Bearbeitung sichergestellt ist und die bei der spanenden Bearbeitung entstehenden hohen Prozesskräfte vollständig durch die mechanische Struktur des Manipulatorarms aufgenommen werden können. In einem anderen Anwendungsfall, wie beispielsweise ein Schleifen oder Polieren, kann es erforderlich sein, dass der Manipulatorarm eine gewisse Nachgiebigkeit aufweist, so dass nur mit einer reduzierten Maximalkraft durch das robotergeführte Werkzeug auf das Werkstück eingewirkt werden kann. Im ersten Falle ist es zweckmäßig den redundanten Gelenken eine Gelenkstellung zuzuweisen, die beispielsweise im Hinblick auf die Prozesskraftrichtung eine hohe statische Steifigkeit des Manipulatorarms aufweist. Im zweiten Falle es zweckmäßig den redundanten Gelenken eine Gelenkstellung zuzuweisen, die beispielsweise im Hinblick auf die Prozesskraftrichtung eine hohe Elastizität des Manipulatorarms aufweist.

So kann die Optimierung des Gelenkstellungswertes des wenigstens einen redundanten Gelenks also auch in Abhängigkeit einer oder mehrerer vorgegebenen Wirkrichtungen durchgeführt werden. Je nach Wirkrichtung, beispielsweise einer Prozesskraftrichtung kann dabei in Abhängigkeit der Gelenkstellungen des Manipulatorarms, insbesondere der redundanten Gelenke des Manipulatorarms wahlweise ein größeres Moment oder ein kleineres Moment dem jeweils betrachteten Gelenk aufgeprägt werden.

Die ein oder die mehreren vorzugebenden Wirkrichtungen können durch einen Bediener des Industrieroboters vor seinem manuell geführten Verstellen des Manipulatorarms der Robotersteuerung manuell vorgegeben werden oder automatisch durch die Robotersteuerung bestimmt werden, insbesondere aus der vom Bediener durch sein manuelles Führen des Manipulatorarms vorgegebenen Bewegungsrichtung automatisch durch die Robotersteuerung bestimmt werden.

In dem erfindungsgemäßen Verfahren ist die Robotersteuerung ausgebildet und/oder eingerichtet, nach einem automatischen Einstellen oder während eines automatischen Einstellens aller Gelenke des Manipulatorarms angesteuert durch die Robotersteuerung auf Grundlage der rückgerechneten, optimierten Gelenkstellungswerte während des manuell geführten Verstellens, ein manuelles Verstellen des wenigstens einen redundanten Gelenks zuzulassen.

Mit dem grundsätzlichen Verfahren sieht der Bediener direkt und vorab insbesondere während der handgeführten Programmierung die spätere Gesamtpose des Manipulatorarms beim Programmablauf. Er kann diese Gesamtpose des Manipulatorarms während der handgeführten Programmierung optisch überprüfen und in der genannten weiterführenden Ausgestaltung, bei der nach einem automatischen Einstellen oder während eines automatischen Einstellens der Bediener aufsetzend bei Wunsch ein manuelles Verstellen der Gelenke des Manipulatorarms, insbesondere des wenigstens einen redundanten Gelenks dennoch durchführen kann, um beispielsweise die automatisch optimierte Gesamtpose des Manipulatorarms noch gezielt korrigieren zu können. Damit kann die maximal mögliche Leistungsfähigkeit des Roboters zusammen mit der maximal möglichen Vorhersehbarkeit der Bewegung bei einfacher Bedienung sichergestellt sein.

Die Robotersteuerung ist außerdem ausgebildet und/oder eingerichtet, ein manuelles Verstellen des wenigstens einen redundanten Gelenks mit Kraftrückkopplung zuzulassen. Die Kraftrückkopplung kann linear oder progressiv mit der Abweichung von den optimierten Gelenkstellungswerten des wenigstens einen redundanten Gelenks zunehmen.

Die Aufgabe der Erfindung wird neben dem erfindungsgemäßen Verfahrens als solches auch gelöst durch einen Industrieroboter aufweisend eine Robotersteuerung, die ausgebildet und/oder eingerichtet ist, ein programmierte Bewegungsabläufe enthaltendes Roboterprogramm auszuführen, sowie aufweisend einen redundanten Manipulatorarm mit mehreren aufeinander folgende Glieder und Gelenke, die gemäß des Roboterprogramms automatisiert und/oder in einem Handfahrbetrieb automatisch verstellbar sind, wobei die Robotersteuerung ausgebildet und/oder eingerichtet ist, ein Verfahren wie beschrieben durchzuführen.

Zusammenfassend nimmt bei den erfindungsgemäßen Verfahren der gesamte Manipulatorarm unmittelbar beim handgeführten Programmieren des Werkzeugbezugspunktes eine Gesamtpose ein, die der Manipulatorarm später beim automatischen Ausführen des Roboterprogramms aufweisen wird, wobei die Gesamtpose des Manipulatorarms kinetostatisch optimal bezüglich der späteren Aufgabe gewählt werden kann.

Der Bediener kann dabei beispielsweise den Endeffektor des Manipulatorarms durch intuitives Handführen entsprechend der zu programmierenden Bearbeitungs- und/oder Handhabungsaufgabe positionieren und ausrichten. Dabei kann der Bediener zusätzlich angeben, ob der Roboter speziellen Anforderungen in den gewünschten Posen genügen soll. Diese zusätzlich programmierten, insbesondere kinetostatischen Eigenschaften des Roboters werden zu einer Pose oder zu einem Bewegungsabschnitt in der Robotersteuerung hinzugefügt. Planungsalgorithmen können aus diesen Informationen die momentan optimale Pose des Manipulatorarms berechnen. Die optimierte Stellung wird direkt auf die Antriebe der Gelenke des Manipulatorarms übertragen, so dass der Bediener unmittelbar die richtigen Posen des Manipulatorarms sehen und mir dieses weiterarbeiten kann.

Ein Programmieren kann dabei wie folgt ablaufen. Zunächst wählt der Bediener einen Werkzeugbezugspunkt aus, mit dem er arbeiten möchte, d.h. dessen mit ihm verbundenes Glied des Manipulatorarm er handgeführt bewegen möchte. Beispielsweise in einem Gravitationskompensationsmodus des Roboters kann der Bediener den Werkzeugbezugspunkt per Hand in eine gewünschte Pose fahren. Die Stellung beispielsweise des Ellenbogengelenks ist dabei nicht relevant. Für die gewünschte Pose kann jetzt zusätzlich eine gewünschte Eigenschaft hinterlegt werden, wie beispielsweise eine erwartete Richtung der maximal zu erzeugenden Kraft bzw. Moment, eine erwartete Richtung der maximal zu erzeugenden Geschwindigkeit, eine erwartete Richtung der maximal zu erzeugenden Dynamik/ Beschleunigung, eine gewünschte Richtung der höchsten Genauigkeit, eine gewünschte Richtung der höchsten Kraftempfindlichkeit, eine beste Regelbarkeit und/oder eine gewünschte Richtung der höchsten mechanischen Steifigkeit.

Diese Eigenschaften können entscheidend sein, beispielsweise wenn der Roboter Bearbeitungsoperationen, wie Bohren, Schleifen, Fräsen oder hochgenaue, feinfühlige Füge- oder Messaufgaben durchführen soll oder bei Handhabungsaufgaben an die Grenzen seiner Traglast oder Taktzeit stößt.

Das Programmieren der Richtung kann dabei z.B. einfach über die Handführung des Werkzeugs erfolgen. Hier könnte eine markante Werkzeugrichtung, wie beispielsweise die Stoßrichtung, verwendet oder eine explizite Koordinatenrichtung ausgewählt werden. Ebenso ist es möglich die gewünschten kinetostatischen Eigenschaften auf eine Ebene zu beziehen, d.h. in gewünschter Ebene soll der Roboter beispielsweise die höchste Genauigkeit aufweisen, die in dieser Pose möglich ist. Diese kann ebenfalls über die Ausrichtung des Werkzeugs definiert werden, welches in diesem Fall den Normalenvektor der Ebene definiert. Die Vorgabe der Richtung kann dabei unabhängig von der eigentlichen Zielpose erfolgen. Der Manipulatorarm kann nach der Definition der Eigenschaftsrichtung wieder seine programmierte Pose einnehmen und wählt dabei automatische die optimale Stellung aus.

Konkrete Ausführungsbeispiele eines gemäß dem erfindungsgemäßen Verfahren betreibbaren Industrieroboters sind in der nachfolgenden Beschreibung unter Bezugnahme auf die beigefügten Figuren näher erläutert.

Es zeigen:
- Fig. 1: eine perspektivische Ansicht eines redundanten Industrieroboters in der Bauart eines Leichtbauroboters mit einer schematisch dargestellten Robotersteuerung und einem Manipulatorarm, dessen Pose manuell geführt verstellbar ist,
- Fig. 2: verschiedene Varianten von unterschiedlich aufgelösten Redundanzen in Abhängigkeit verschiedener Eigenschaften des Manipulatorarms, die zu optimieren sind,
- Fig. 3: ein bildlich dargestellter, beispielhafter Ablauf eines erfindungsgemäßen Verfahrens zum Programmieren von Bewegungsabläufen an dem redundanten Leichtbauroboter gemäß Fig. 1,
- Fig. 4: ein bildlich dargestellter Ablauf eines erfindungsgemäßen Verfahrens zum Programmieren von Bewegungsabläufen an dem redundanten Leichtbauroboter gemäß Fig. 1 am Beispiel einer Greif- und Hebeaufgabe, und
- Fig. 5: ein bildlich dargestellter Ablauf eines erfindungsgemäßen Verfahrens, bei dem ein manuelles Korrigieren einer optimierten Pose des Manipulatorarms am Beispiel der Vermeidung von Kollisionen zugelassen ist.

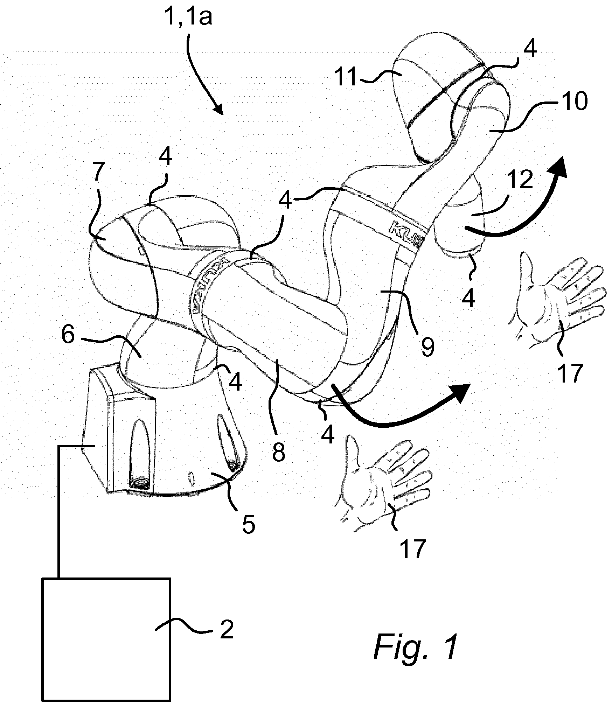

Die Fig. 1 zeigt einen beispielhaften robotischen Arbeitsplatz mit einem Manipulatorarm 1a eines Industrieroboters 1. Der Industrieroboter 1 ist in der beispielhaften Ausführung als ein so genannter Leichtbauroboter des Typs KUKA LBR ausgeführt, der den Manipulatorarm 1a und eine zugeordnete Robotersteuerung 2 aufweist. Der redundante Manipulatorarm 1a umfasst im Falle des vorliegenden Ausführungsbeispiels acht nacheinander angeordnete und mittels sieben Gelenken 4 drehbar miteinander verbundene Glieder 5 bis 12.

Die Robotersteuerung 2 des Industrieroboters 1 ist ausgebildet bzw. eingerichtet, ein Roboterprogramm auszuführen, durch welches die Gelenke 4 des Manipulatorarms 1a gemäß seines Roboterprogramms automatisiert oder in einem Handfahrbetrieb automatisch verstellt bzw. drehbewegt werden kann. Dazu ist die Robotersteuerung 2 mit ansteuerbaren elektrischen Antrieben verbunden, die ausgebildet sind, die Gelenke 4 des Manipulatorarms 1a zu verstellen.

Die Robotersteuerung 2 ist ausgebildet und/oder eingerichtet, eines oder mehrere der erfindungsgemäßen Verfahren zum Programmieren von Bewegungsabläufen des redundanten Industrieroboters 1 durch manuell geführtes Verstellen der Pose eines Manipulatorarms 1a, wie im Folgenden anhand mehrerer konkreter Ausführungsbeispiele näher beschrieben, durchzuführen.

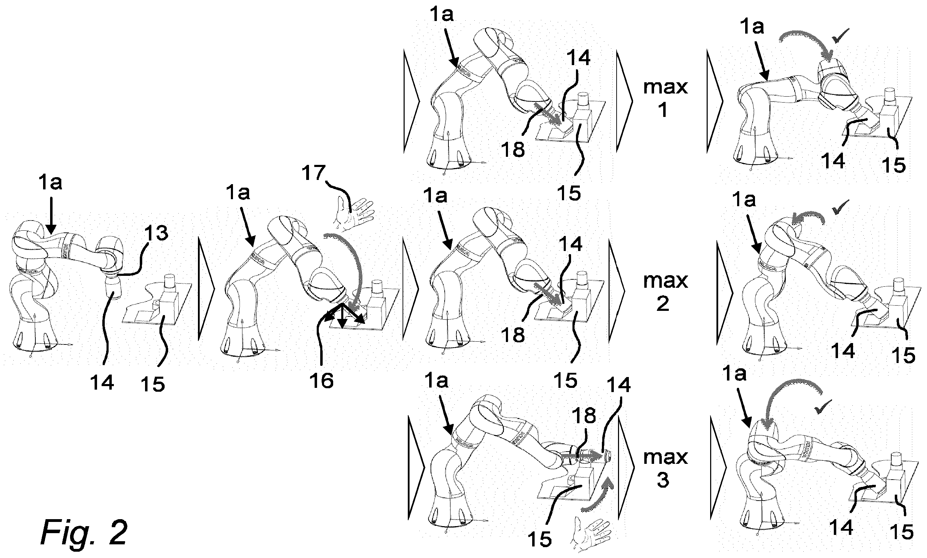

In der Fig. 2 sind beispielhafte Schritte erfindungsgemäßer Verfahren bildlich dargestellt. Die äußere linke Darstellung zeigt den Manipulatorarm 1a mit einem an seinem Handflansch 13 befestigtes Werkzeug 14, das im Falle des vorliegenden Beispiels ein Schleifwerkzeug ist. Das Werkzeug 14 ist zur Bearbeitung eines Werkstücks 15 ausgebildet. Ein Werkzeugbezugspunkt 16 kann dabei beispielsweise ein Punkt auf der Rotationsachse des Werkzeugs 14 sein.

In einem ersten Verfahrenschritt erfolgt, wie in der inneren linken Darstellung der Fig. 2 gezeigt, ein manuell geführtes Verstellen desjenigen Gliedes 5-12 des Manipulatorarms 1a, dem der Werkzeugbezugspunkt 16 zugeordnet ist, aus einer ersten Position und ersten Orientierung im Raum in eine zweite Position und/oder zweite Orientierung im Raum. Das manuell geführte Verstellen kann dabei, wie angedeutet, durch eine Hand 17 eines Bedieners des Industrieroboters 1 erfolgen. Das manuell geführte Glied 5-12 ist im dargestellten Ausführungsbeispiel der Handflansch 13 des Manipulatorarms 1a.

Eine Optimierung der Gelenkstellungswerte des wenigstens einen redundanten Gelenks 4 kann in Abhängigkeit einer oder mehrerer vorgegebenen Wirkrichtungen durchgeführt werden, wie dies in den inneren rechten drei Darstellungen der Fig. 2 gezeigt ist. Je nach Wirkrichtung 18, beispielsweise einer Prozesskraftrichtung kann dabei in Abhängigkeit der Gelenkstellungen des Manipulatorarms 1a, insbesondere der redundanten Gelenke 4 des Manipulatorarms 1a wahlweise ein größeres Moment oder ein kleineres Moment dem jeweils betrachteten Gelenk 4 aufgeprägt werden.

Die ein oder die mehreren vorzugebenden Wirkrichtungen 18 können durch einen Bediener des Industrieroboters 1 vor seinem manuell geführten Verstellen des Manipulatorarms 1a der Robotersteuerung 2 manuell vorgegeben werden oder automatisch durch die Robotersteuerung 2 bestimmt werden, insbesondere aus der vom Bediener durch sein manuelles Führen des Manipulatorarms 1a vorgegebenen Bewegungsrichtung automatisch durch die Robotersteuerung 2 bestimmt werden.

Die zu optimierende Eigenschaft kann beispielsweise eine Prozesskraft, eine Steifigkeit (MAX 1) des Manipulatorarms, eine Positioniergenauigkeit des Manipulatorarms, eine Bewegungsgeschwindigkeit des Manipulatorarms, eine Beschleunigungsfähigkeit des Manipulatorarms und/oder eine Sensitivität (MAX 2) bei der Kraftrückkopplung des Manipulatorarms 1a sein. So ist es beispielsweise vorteilhaft, wenn im Falle einer Aufgabenstellung mit spanender Bearbeitung des Werkstücks 15 durch das robotergeführte Werkzeug 14, wie das Bohren oder Fräsen, der gesamte Manipulatorarm 1a eine sehr hohe Steifigkeit (MAX 1) aufweist, so dass eine maßgenaue Bearbeitung sichergestellt ist und die bei der spanenden Bearbeitung entstehenden hohen Prozesskräfte vollständig durch die mechanische Struktur des Manipulatorarms 1a aufgenommen werden können. In einem anderen Anwendungsfall, wie beispielsweise ein Schleifen oder Polieren, kann es erforderlich sein, dass der Manipulatorarm 1a eine gewisse Nachgiebigkeit und dadurch eine bessere Sensitivität aufweist, so dass nur mit einer reduzierten Maximalkraft durch das robotergeführte Werkzeug 14 auf das Werkstück 15 eingewirkt werden kann. Im ersten Falle ist es zweckmäßig den redundanten Gelenken 4 eine Gelenkstellung zuzuweisen, die beispielsweise im Hinblick auf die Prozesskraftrichtung eine hohe statische Steifigkeit des Manipulatorarms 1a aufweist, wie dies in den oberen und unteren Darstellungen in der Fig. 2 gezeigt ist. Im zweiten Falle es zweckmäßig den redundanten Gelenken 4 eine Gelenkstellung zuzuweisen, die beispielsweise im Hinblick auf die Prozesskraftrichtung eine hohe Sensitivität (Max 2) des Manipulatorarms aufweist, wie dies in den mittleren Darstellungen in der Fig. 2 gezeigt ist.

Wie in den äußeren rechten drei Darstellungen der Fig. 2 gezeigt, erfolgt ein unterschiedliches Rückrechnen der Gelenkstellungswerte aller Gelenke 4 des Manipulatorarms 1a aus der zweiten Position und zweiten Orientierung des Werkzeugbezugspunktes 16 des Manipulatorarms 1a unter verschiedener Auflösung der Redundanz durch Bestimmen eines optimierten Gelenkstellungswertes des wenigstens einen redundanten Gelenks 4 und ein automatisches Einstellen aller Gelenke 4 des Manipulatorarms 1a angesteuert durch die Robotersteuerung 2 auf Grundlage der rückgerechneten, optimierten Gelenkstellungswerte während des manuell geführten Verstellens. So ist in der in Fig. 2 unten schematisch dargestellten Variante eine Optimierung der Gelenkstellungswerte in Hinblick auf eine hohe Steifigkeit (MAX 1) ausgewählt und eine Wirkrichtung 18, die in den unteren Darstellungen beispielsweise in einer horizontalen Richtung von links nach rechts weisend ausgewählt. Dies bedeutet, dass eine Optimierung der Gelenkstellungswerte derart erfolgen soll, dass der Manipulatorarm 1a eine hohe Steifigkeit in einer horizontalen Richtung aufweisen soll, so dass beispielsweise das Werkzeug 14 bei Bearbeitung des Werkstücks 15, wie in der ganz unteren ganz rechten Darstellung der Fig. 2 gezeigt, eine hohe Prozesskraft aufbringen kann, ohne dass der Manipulatorarm 1a ausweicht.

Durch die in Fig. 2 untereinander gezeigten schematischen Darstellungen dreier beispielhafter Varianten wird ein Auswählen eines Algorithmus von mehreren vorgegebenen verschiedenen Algorithmen zur Rückrechnung der Gelenkstellungswerte aller Gelenke 4 des Manipulatorarms 1a aus der zweiten Position und zweiten Orientierung des Werkzeugbezugspunktes 16 des Manipulatorarms 1a unter Auflösung der Redundanz durch Bestimmen des optimierten Gelenkstellungswertes des wenigstens einen redundanten Gelenks 4, verdeutlicht.

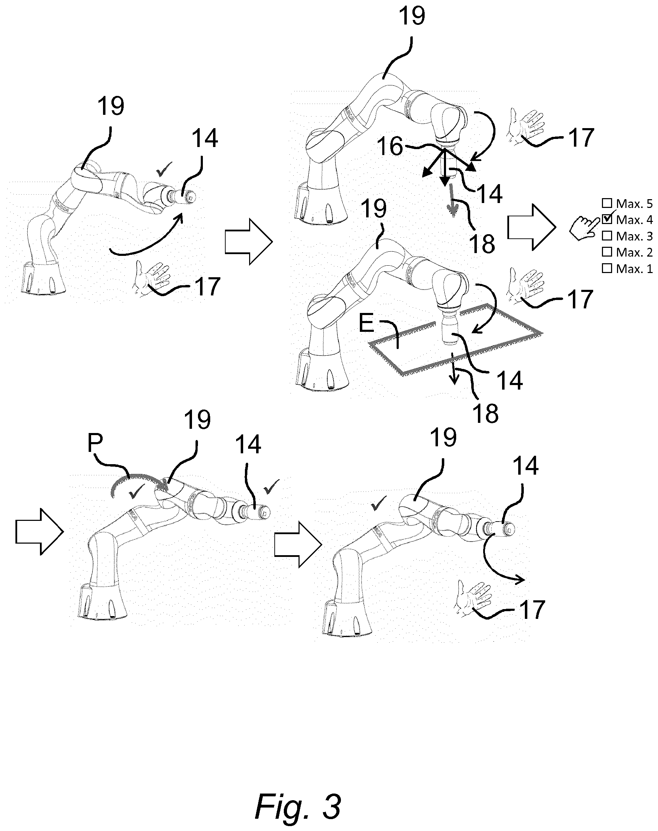

Das Auswählen des Algorithmus kann, wie in der Fig. 3 ganz rechts dargestellt, durch die Hand 17 eines Bedieners des Industrieroboters 1 erfolgen, insbesondere vor seinem manuell geführten Verstellen des Manipulatorarms 1a, wie in der Darstellung links oben angedeutet. Im Falle des Ausführungsbeispiels der Fig. 3 wählt der Bediener beispielsweise eine maximale Genauigkeit (MAX 4) aus und definiert eine gewünschte Wirkrichtung 18.

Ein Programmieren kann dabei wie folgt ablaufen. Zunächst wählt der Bediener einen Werkzeugbezugspunkt 16 aus, mit dem er arbeiten möchte, d.h. dessen mit ihm verbundenes Glied 4, beispielsweise der Handflansch 13 des Manipulatorarms 1a er handgeführt bewegen möchte. Beispielsweise in einem Gravitationskompensationsmodus des Industrieroboters 1 kann der Bediener den Werkzeugbezugspunkt 16 per Hand in eine gewünschte Pose fahren, wie in Fig. 3 in der links oberen Darstellung gezeigt. Die Stellung beispielsweise eines Ellenbogengelenks 19 ist dabei nicht relevant. Für die gewünschte Pose kann jetzt zusätzlich eine gewünschte Eigenschaft (MAX 1 bis MAX 5) hinterlegt werden, wie beispielsweise eine erwartete Richtung der maximal zu erzeugenden Kraft (MAX 5) bzw. Moment, eine erwartete Richtung der maximal zu erzeugenden Geschwindigkeit (MAX 3), eine erwartete Richtung der maximal zu erzeugenden Dynamik/ Beschleunigung, eine gewünschte Richtung der höchsten Genauigkeit (Max 4), eine gewünschte Richtung der höchsten Kraftempfindlichkeit (MAX 2), eine beste Regelbarkeit und/oder eine gewünschte Richtung der höchsten mechanischen Steifigkeit (MAX 1).

Das Programmieren der Richtung kann dabei, wie in der rechten oberen Darstellung der Fig. 3 gezeigt, einfach über ein Führen mit der Hand 17 des Bedieners an dem Werkzeug 14 erfolgen. Hier könnte eine markante Werkzeugrichtung, wie beispielsweise die Stoßrichtung (Pfeil), verwendet oder eine explizite Koordinatenrichtung ausgewählt werden. Ebenso ist es möglich die gewünschten kinetostatischen Eigenschaften auf eine Ebene E zu beziehen, d.h. in gewünschter Ebene E soll der Industrieroboter 1 beispielsweise die höchste Genauigkeit (MAX 4) aufweisen, die in dieser Pose möglich ist. Diese kann ebenfalls über die Ausrichtung des Werkzeugs 14 definiert werden, welches in diesem Fall den Normalenvektor (Pfeil) der Ebene E definiert. Die Vorgabe der Richtung kann dabei unabhängig von der eigentlichen Zielpose erfolgen. Der Manipulatorarm 1a kann nach der Definition der Eigenschaftsrichtung wieder seine programmierte Pose einnehmen, wie in der rechten unteren Darstellung der Fig. 3 gezeigt, wobei gegenüber der ursprünglichen Pose des Manipulatorarms 1a, wie in der linken oberen Darstellung gezeigt, das Ellenbogengelenks 19 automatische in die optimale Stellung optimiert ist, wie dies in der linken unteren Darstellung der Fig. 3 durch den Pfeilschwenk P angedeutet ist. Danach kann der Manipulatorarm in einer freien Weise von Hand weitergeführt werden, wobei er seine Eigenschaften beibehält.

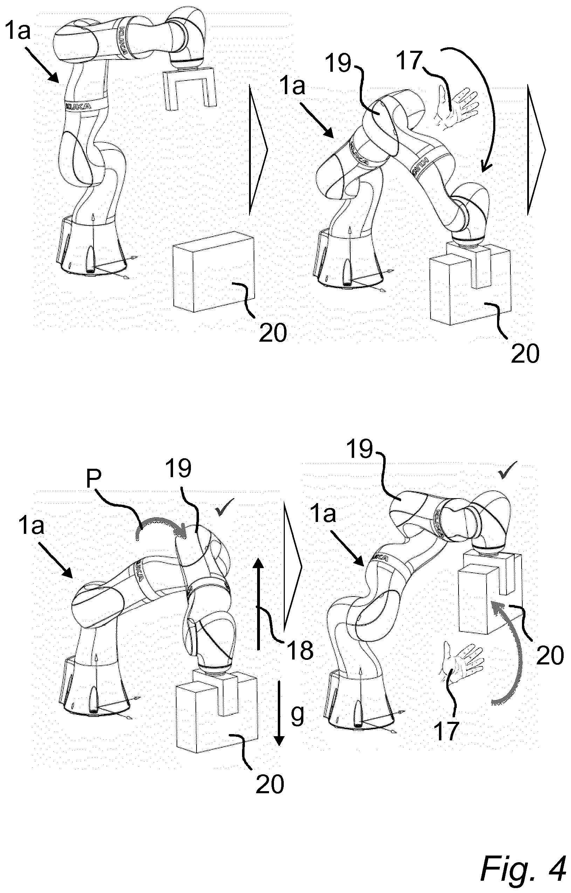

In der Fig. 4 ist in vier Schritten anhand einer zu programmierenden beispielhaften Aufgabe das Anheben und Bewegen eines Objekts 20 durch den Manipulatorarm 1a dargestellt. Im Falle der dargestellten beispielhaften Aufgabe ist ein Vorgeben von Wirkrichtungen 18 durch einen Bediener des Industrieroboters nicht erforderlich. Allein durch die zuvor definierte bspw. in einem Menü ausgewählte Aufgabe des Anhebens ist die notwendige Wirkrichtung 18, nämlich die entgegen der Schwerkraft ausrichtete Wirkrichtung 18 aufgabenspezifisch festgelegt. Insoweit kann die Wirkrichtung 18 automatisch durch die Robotersteuerung 2 bestimmt werden. Nachdem der Greifvorgang, wie in der rechten oberen Darstellung der Fig. 4 gezeigt, durch manuell geführtes Verstellen mittels der Hand 17 des Bedieners programmiert ist, kann eine automatische Optimierung der Gelenkstellungswerte, insbesondere für das redundante Ellbogengelenk 19, wie durch den Pfeil P in der linken unteren Darstellung der Fig. 4 gezeigt, durchgeführt werden, so dass das Objekt, wie in der rechten unteren Darstellung der Fig. 4 gezeigt, in einer optimierten Pose des Manipulatorarms 1 a angehoben werden kann.

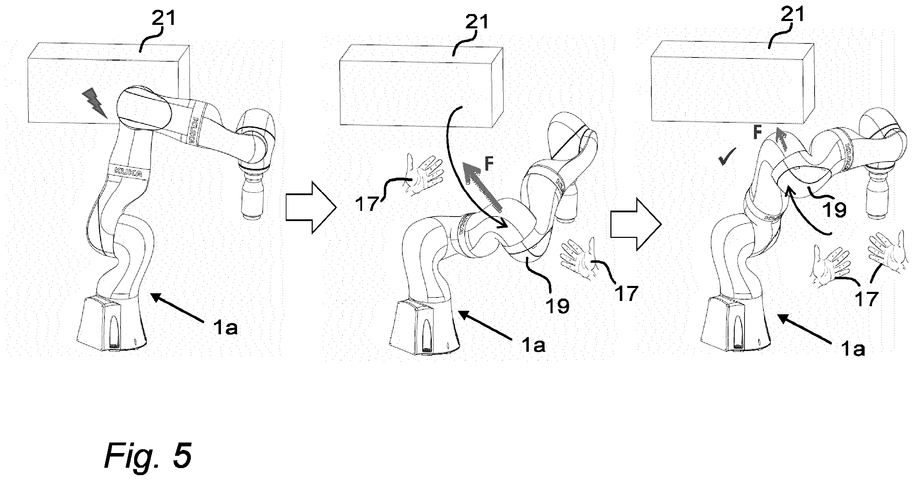

In dem in Fig. 5 gezeigten Ausführungsbeispiel ist nach einem automatischen Einstellen oder auch während eines automatischen Einstellens aller Gelenke 4 des Manipulatorarms 1a auf die optimierten Gelenkstellungswerte, zusätzlich ein manuelles Verstellen der Gelenke 4 des Manipulatorarms 1a zugelassen, so dass beispielsweise im Falle einer optimierten Pose, die mit einem Hindernis 21, wie in der linken Darstellung der Fig. 5 gezeigt, kollidieren würde, ein zusätzliches, manuelles Verstellen der Gelenke 4 des Manipulatorarms 1a möglich ist, so dass die Hand 17 des Bedieners in einem Ausnahmefall beispielsweise das Ellenbogengelenk 19 von dem Hindernis 21 wegschwenken kann, so dass dann, wie in der rechten Darstellung der Fig. 5 gezeigt, eine abgewandete Programmierung erfolgt, welche mit dem Hindernis 21 nicht kollidiert, aber nahe an der optimierten Pose des Manipulatorarms 1a an dem Hindernis 21 vorbeiführt. Dabei kann die Robotersteuerung 2 ausgebildet und/oder eingerichtet ist, ein manuelles Verstellen der Gelenke 4 des Manipulatorarms 1a nur mit Kraftrückkopplung (Pfeil F) zuzulassen. Die Kraftrückkopplung kann linear oder progressiv mit der Abweichung von den optimierten Gelenkstellungswerten, insbesondere des wenigstens einen redundanten Gelenks 4 zunehmen. Dies kann bedeuten, dass mit zunehmender Abweichung der vom Bediener zur Umgehung des Hindernis 21 eingestellten Pose des Manipulatorarms 1a ein manuelles bewegen des Manipulatorarms 1a immer schwerer wird, d.h. nur mehr mit zunehmendem Kraftaufwand möglich ist, so dass dem Bediener eine zunehmende Abweichung von der optimierten Pose des Manipulatorarms 1a mit Kraftrückkopplung vermittelt wird. Dies kann den Bediener dazu anleiten, die Pose des Manipulatorarms 1a nur soweit und möglichst nur geringfügig aus der optimierten Pose herauszuschwenken, soweit dies zur Umgehung des Hindernisses 21 überhaupt notwendig ist.

## Patentansprüche

1. Verfahren zum Programmieren von Bewegungsabläufen eines redundanten Industrieroboters (1) durch manuell geführtes Verstellen der Pose eines Manipulatorarms (1a) des Industrieroboters (1), der mehrere aufeinander folgende Glieder (5-12) aufweist, die durch verstellbare, wenigstens ein redundantes Gelenk (4) umfassende Gelenke (4) verbunden sind, die von wenigstens einer Robotersteuerung (2) des Industrieroboters (1) angesteuert verstellbar sind, aufweisend die Schritte:
manuell geführtes Verstellen desjenigen Gliedes (5-12) des Manipulatorarms (1a), dem ein Werkzeugbezugspunkt (16) zugeordnet ist, aus einer ersten Position und ersten Orientierung im Raum in eine zweite Position und/oder zweite Orientierung im Raum,
Rückrechnen der Gelenkstellungswerte aller Gelenke (4) des Manipulatorarms (1a) aus der zweiten Position und zweiten Orientierung des Werkzeugbezugspunktes (16) des Manipulatorarms (1a) unter Auflösung der Redundanz durch Bestimmen eines optimierten Gelenkstellungswertes des wenigstens einen redundanten Gelenks (4),
automatisches Einstellen aller Gelenke (4) des Manipulatorarms (1a) angesteuert durch die Robotersteuerung (2) auf Grundlage der rückgerechneten, optimierten Gelenkstellungswerte während des manuell geführten Verstellens, wobei die Robotersteuerung (2) ausgebildet und/oder eingerichtet ist, nach einem automatischen Einstellen oder während eines automatischen Einstellens aller Gelenke (4) des Manipulatorarms (1a) angesteuert durch die Robotersteuerung (2) auf Grundlage der rückgerechneten, optimierten Gelenkstellungswerte während des manuell geführten Verstellens, ein manuelles Verstellen des wenigstens einen redundanten Gelenks (4) des Manipulatorarms (1a) mit Kraftrückkopplung zuzulassen, wobei eine Optimierung des Gelenkstellungswertes des wenigstens einen redundanten Gelenks (4) nach statischen und/oder kinetischen Eigenschaften des Manipulatorarms (1a) erfolgt, **dadurch gekennzeichnet, dass** die zu optimierende Eigenschaft eine Prozesskraft, eine Steifigkeit des Manipulatorarms (1a) und/oder eine Sensitivität bei der Kraftrückkopplung des Manipulatorarms (1a) ist.

2. Verfahren nach Anspruch 1, bei dem ein Auswählen eines Algorithmus von mehreren vorgegebenen verschiedenen Algorithmen zur Rückrechnung der Gelenkstellungswerte aller Gelenke (4) des Manipulatorarms (1a) aus der zweiten Position und zweiten Orientierung des Werkzeugbezugspunktes (16) des Manipulatorarms (1a) unter Auflösung der Redundanz durch Bestimmen des optimierten Gelenkstellungswertes des wenigstens einen redundanten Gelenks (4) erfolgt.

3. Verfahren nach Anspruch 2, bei dem das Auswählen des Algorithmus durch einen Bediener des Industrieroboters (1) vor seinem manuell geführten Verstellen des Manipulatorarms (1a) erfolgt.

4. Verfahren nach Anspruch 1, bei dem die nach statischen und/oder kinetischen Eigenschaften des Manipulatorarms (1a) erfolgende Optimierung des Gelenkstellungswertes des wenigstens einen redundanten Gelenks (4) in Abhängigkeit von Anforderung an die zu programmierenden Bewegungsabläufe durchgeführt wird.

5. Verfahren nach Anspruch 1 oder 4, bei dem die Optimierung des Gelenkstellungswertes des wenigstens einen redundanten Gelenks (4) in Abhängigkeit einer oder mehrerer vorgegebenen Wirkrichtungen (18) durchgeführt wird.

6. Verfahren nach Anspruch 5, bei dem die ein oder die mehreren vorzugebenden Wirkrichtungen (18) durch einen Bediener des Industrieroboters (1) vor seinem manuell geführten Verstellen des Manipulatorarms (1a) der Robotersteuerung (2) manuell vorgegeben werden oder aus der vom Bediener durch sein manuelles Führen des Manipulatorarms (1a) vorgegebenen Bewegungsrichtung automatisch durch die Robotersteuerung (2) bestimmt werden.

7. Verfahren nach einem der Ansprüche 1 bis 6, bei dem die Kraftrückkopplung linear oder progressiv mit der Abweichung von den optimierten Gelenkstellungswerten, insbesondere des wenigstens einen redundanten Gelenks (4) zunimmt.

8. Industrieroboter aufweisend eine Robotersteuerung (2), die ausgebildet und/oder eingerichtet ist, ein programmierte Bewegungsabläufe enthaltendes Roboterprogramm auszuführen, sowie aufweisend einen redundanten Manipulatorarm (1a) mit mehreren aufeinander folgende Glieder (5-12) und Gelenke (4), die gemäß des Roboterprogramms automatisiert und/oder in einem Handfahrbetrieb automatisch verstellbar sind, wobei die Robotersteuerung (2) ausgebildet und/oder eingerichtet ist, ein Verfahren nach einem der Ansprüche 1 bis 7 durchzuführen.

## Claims

1. Method for programming motion sequences of a redundant industrial robot (1) by manually guided adjustment of the pose of a manipulator arm (1a) of the industrial robot (1), which has a plurality of successive links (5-12) connected by adjustable joints (4) comprising at least one redundant joint (4), which adjustable joints (4) are adjustable under the control of at least one robot controller (2) of the industrial robot (1), comprising the steps of:
- displacing that link (5-12) of the manipulator arm (1a) to which a tool reference point (16) is assigned, manually guided, from a first position and first orientation in space into a second position and/or second orientation in space,
- back-calculating the joint position values of all joints (4) of the manipulator arm (1a) from the second position and second orientation of the tool reference point (16) of the manipulator arm (1a) while resolving the redundancy by determining an optimized joint position value of the at least one redundant joint (4),
- automatically adjusting all joints (4) of the manipulator arm (1a) controlled by the robot controller (2) on the basis of the back-calculated, optimized joint position values during the manually guided adjustment, wherein the robot controller (2) is designed and/or configured to allow a manual adjustment of the at least one redundant joint (4) of the manipulator arm (1a) with force feedback, after an automatic adjustment or during an automatic adjustment of all joints (4) of the manipulator arm (1a) controlled by the robot controller (2) on the basis of the back-calculated, optimized joint position values during the manually guided adjustment, wherein an optimization of the joint position value of the at least one redundant joint (4) is performed according to static and/or kinematic properties of the manipulator arm (1a),
**characterized in that** the property to be optimized is a process force, a stiffness of the manipulator arm (1a) and/or a sensitivity in force feedback of the manipulator arm (1a).

2. Method according to claim 1, wherein selecting an algorithm from a plurality of predetermined different algorithms for back-calculating the joint position values of all joints (4) of the manipulator arm (1a) from the second position and second orientation of the tool reference point (16) of the manipulator arm (1a) while resolving the redundancy by determining the optimized joint position value of the at least one redundant joint (4) is performed.

3. Method according to claim 2, wherein the selection of the algorithm is performed by an operator of the industrial robot (1) prior to its manually guided displacement of the manipulator arm (1a).

4. Method according to claim 1, wherein the optimization of the joint position value of the at least one redundant joint (4), which takes place according to static and/or kinetic properties of the manipulator arm (1a), is carried out as a function of requirements for the motion sequences to be programmed.

5. Method according to claim 1 or 4, in which the optimization of the joint position value of the at least one redundant joint (4) is carried out as a function of one or more predetermined effective directions (18).

6. Method according to claim 5, in which the one or more effective directions (18) to be preset are manually preset by an operator of the industrial robot (1) before his manually guided displacement of the manipulator arm (1a) of the robot controller (2) or are automatically determined by the robot controller (2) from the direction of movement preset by the operator by his manual guidance of the manipulator arm (1a).

7. Method according to any one of claims 1 to 6, wherein the force feedback increases linearly or progressively with the deviation from the optimized joint position values, in particular of the at least one redundant joint (4).

8. Industrial robot comprising a robot controller (2) which is designed and/or configured to execute a robot program containing programmed motion sequences, and comprising a redundant manipulator arm (1a) with a plurality of successive links (5-12) and joints (4) which can be automatically adjusted in accordance with the robot program in an automated mode and/or in a manual travel mode, the robot controller (2) being designed and/or configured to carry out a method according to one of claims 1 to 7.

## Revendications

1. Procédé de programmation de séquences de mouvements d'un robot industriel redondant (1) par réglage guidé manuellement de la pose d'un bras de manipulateur (1a) du robot industriel (1), qui présente plusieurs membres (5-12) successifs, qui sont reliés par des articulations (4) réglables comprenant au moins une articulation redondante (4), qui sont réglables par pilotage d'au moins une commande de robot (2) du robot industriel (1), comprenant les étapes suivantes :
réglage guidé manuellement du membre (5-12) du bras de manipulateur (1a) auquel est associé un point de référence d'outil (16), depuis une première position et une première orientation dans l'espace vers une deuxième position et/ou une deuxième orientation dans l'espace,
recalcul des valeurs de position d'articulation de toutes les articulations (4) du bras du manipulateur (1a) depuis la deuxième position et la deuxième orientation du point de référence d'outil (16) du bras du manipulateur (1a) en résolvant la redondance par la détermination d'une valeur de position d'articulation optimisée de ladite moins une articulation redondante,
réglage automatique de toutes les articulations (4) du bras de manipulateur (1a), piloté par la commande de robot (2) sur la base des valeurs de position d'articulation optimisées recalculées pendant le réglage guidé manuellement, la commande de robot (2) étant réalisée et/ou configurée, pour permettre, après un réglage automatique ou pendant un réglage automatique de toutes les articulations (4) du bras de manipulateur (1a) piloté par la commande de robot (2) sur la base des valeurs de position d'articulation optimisées recalculées pendant le réglage guidé manuellement, un réglage manuel d'au moins une articulation redondante (4) du bras de manipulateur (1a) avec rétroaction de force,
une optimisation de la valeur de position d'articulation d'au moins une articulation redondante (4) s'effectuant selon des propriétés statiques et/ou cinétiques du bras de manipulateur (1a), **caractérisé en ce que** la propriété à optimiser est une force de processus, une rigidité du bras de manipulateur (1a) et/ou une sensibilité lors de la rétroaction de force du bras de manipulateur (1a).

2. Procédé selon la revendication 1, dans lequel une sélection d'un algorithme parmi plusieurs algorithmes différents prédéfinis pour recalculer les valeurs de position d'articulation de toutes les articulations (4) du bras de manipulateur (1a) depuis la deuxième position et la deuxième orientation du point de référence d'outil (16) du bras de manipulateur (1a) est effectuée en résolvant la redondance par détermination de la valeur de position d'articulation optimisée de la au moins une articulation redondante (4).

3. Procédé selon la revendication 2, dans lequel la sélection de l'algorithme est effectuée par un opérateur du robot industriel (1) avant son déplacement guidé manuellement du bras de manipulateur (1a).

4. Procédé selon la revendication 1, dans lequel l'optimisation de la valeur de position d'articulation de l'au moins une articulation redondante (4), qui s'effectue selon des propriétés statiques et/ou cinétiques du bras de manipulateur (1a), est réalisée en fonction d'exigences relatives aux séquences de mouvements à programmer.

5. Procédé selon la revendication 1 ou 4, dans lequel l'optimisation de la valeur de position d'articulation de l'au moins une articulation redondante (4) est effectuée en fonction d'une ou de plusieurs directions d'action (18) prédéfinies.

6. Procédé selon la revendication 5, dans lequel lesdites une ou plusieurs directions d'action (18) à prédéterminer sont prédéterminées manuellement par un opérateur du robot industriel (1) avant son déplacement guidé manuellement du bras de manipulateur (1a) de la commande de robot (2) ou sont déterminées automatiquement par la commande de robot (2) à partir de la direction de déplacement prédéterminée par l'opérateur par son guidage manuel du bras de manipulateur (1a).

7. Procédé selon l'une des revendications 1 à 6, dans lequel le rétroaction de force augmente de manière linéaire ou progressive avec l'écart par rapport aux valeurs de position d'articulation optimisées, en particulier de ladite au moins une articulation redondante (4).

8. Robot industriel présentant une commande de robot (2) qui est réalisée et/ou configurée pour exécuter un programme de robot contenant des séquences de mouvement programmées, ainsi que présentant un bras de manipulateur (1a) redondant avec plusieurs membres (5-12) et articulations (4) successifs qui sont réglables automatiquement selon le programme de robot et/ou dans un mode de déplacement manuel, la commande de robot (2) étant réalisée et/ou configurée pour exécuter un procédé selon l'une des revendications 1 à 7.
